## Europäisches Patentamt

## European Patent Office

## Office européen des brevets

(19)

(11) Veröffentlichungsnummer: **0 204 133**
**B1**

(12) # EUROPÄISCHE PATENTSCHRIFT

(45) Veröffentlichungstag der Patentschrift:
27.12.89

(21) Anmeldenummer: **86105803.0**

(22) Anmeldetag: **26.04.86**

(51) Int. Cl.⁴: **B 29 C 45/57**

(54) Verfahren zum Herstellen von Gegenständen aus thermoplastischem Kunststoff durch Spritzgiessen.

(30) Priorität: **06.05.85 DE 3516179**

(43) Veröffentlichungstag der Anmeldung:
**10.12.86 Patentblatt 86/50**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**DE-A-1 729 391**
**DE-A-2 605 480**
**DE-B-1 105 153**
**US-A-2 471 814**
**US-A-3 172 161**
**US-A-3 395 424**
**US-A-4 256 689**

(73) Patentinhaber: **Krupp Formaplast Maschinenbau GmbH, Helenenstrasse 149, D-4300 Essen 1 (DE)**

(72) Erfinder: **Schramm, Klaus, Dr., Havkenscheiderstrasse 244, D-4630 Bochum (DE)**
Erfinder: **Weist, Friedel, Herzogstrasse 83d, D-4200 Oberhausen 11 (DE)**

(74) Vertreter: **Koepsell, Helmut, Dipl.- Ing., Mittelstrasse 7, D-5000 Köln 1 (DE)**

**Beschreibung**

Die Erfindung betrifft ein Verfahren und eine Vorrichtung zum Herstellen von Gegenständen aus thermoplastischem Kunststoff durch Spritzgießen unter Verwendung eines mit einer Schnecke versehenen Extruders mit Düsenkopf und einer Spritzgießform, bei welchem zunächst durch axiales Verschieben der Schnecke des Extruders das in einem ersten Speicherraum gespeicherte Material in Richtung auf die Spritzgießform zum Füllen derselben bewegt wird und nach dem Füllen der Spritzgießform auf das in letzterer befindliche thermoplastische Material ein Nachdruck zur Kompensation von bei der Abkühlung auftretenden Materialschwindungen aufrechterhalten bleibt unter Verwendung eines Kolbens, der aus einem mit dem Verbindungskanal zwischen Extruder und Spritzgießform verbundenen zweiten Speicherraum das darin befindliche thermoplastische Material in Richtung auf die Spritzgießform zu verdrängen sucht, während die Verbindung zwischen Extruder und Spritzgießform unterbrochen ist, und während des Füllens der Spritzgießform der Düsenkopf mit dem Düsenteil durch ein Antriebsmittel mit einer Kraft gegen die Spritzgießform gedrückt wird, die größer ist als die entgegengerichtete Kraft, die aus dem Einpressen des thermoplastischen Materials in die Spritzgießform resultiert.

Die Dauer, während welcher der Nachdruck aufrechterhalten bleiben muß, ist insbesondere bei dickwandigen Gegenständen verhältnismäßig lang. Dies ist bei den heute allgemein eingesetzten Schubschnecken-Spritzgießmaschinen dann nachteilig, wenn der Nachdruck über den von der Schnecke aufgebrachten axialen Druck aufrechterhalten wird, da während der dafür benötigten Zeit die Schnecke nicht zur Plastifizierung des thermoplastischen Materials für den nächsten Arbeitsgang genutzt werden kann.

Die US-A-4 256 689 offenbart ein Verfahren der einleitend beschriebenen Art, bei welchem der zweite Speicherraum während des Füllens der Spritzgießform ganz oder teilweise mit Kunststoff gefüllt wird. Dies hat den Nachteil, daß es unmöglich ist, ein von Füllvorgang zu Füllvorgang konstantes Volumen einzuhalten. Einmal ist nicht vorhersehbar, wieviel von dem während des Ausstoßhubs der Schnecke aus dem ersten Speicherraum ausgestoßenen Material in die Spritzgießform und wieviel in den zweiten Speicherraum gelangt. Zum anderen ist die Materialmenge, die nach Beendigung des Nachdrückens im zweiten Speicherraum verblieben ist, nicht kontrollierbar, so daß völlig unübersichtliche Verhältnisse bezüglich der bei jedem Arbeitshub in die Spritzgießform gelangenden Materialmengen herrschen. Ein Bemessen des bei jedem Arbeitszyklus in die Spritzgießform einzubringenden Materials durch wegabhängiges Steuern des Ausstoßhubes der Schnecke beim Entleeren des ersten Speicherraumes ist unter diesen Betriebsbedingungen nicht möglich.

Ferner offenbart die DE-A-3 307 586 ein Verfahren zum Spritzgießen von Kunststoffteilen, bei welchem ebenfalls ein zusätzlicher, zweiter Speicherraum vorgesehen ist, aus dem durch einen besonderen, diesem Speicherraum zugeordneten Kolben thermoplastisches Material in Richtung auf die Spritzgießform verdrängt wird, um den erforderlichen Nachdruck aufrechtzuerhalten. Dabei ist gleichzeitig die Verbindung zwischen Extruder und zweitem Speicherraum bzw. Spritzgießform unterbrochen, so daß die Schnecke des Extruders bereits wieder vor Beendigung der Nachdruckphase in Rotation versetzt werden kann, um das für den nächsten Arbeitszyklus benötigte thermoplastische Material zu plastifizieren. Jedoch zweigt im bekannten Fall der zweite Speicherraum rechtwinkling von den im Düsenkopf befindlichen Verbindungskanal zwischen Extruder und Spritzgießform ab, so daß das thermoplastische Material eine zweimalige scharfe Umlenkung erfährt. Dies ist unerwünscht. Außerdem begünstigt die Anordnung des Speicherraumes ein Stagnieren des Materials und somit dessen thermische Zersetzung. Die Reinigung des Speicherraumes wird zudem durch die Art der Anordnung erschwert. Da das im zweiten Speicherraum nach jeder Nachdruckphase verbliebene Material während des folgenden Arbeitszyklus' dem von der Schnecke in die Spritzgießform verdrängten Material hinzugefügt wird, weist auch dieses bekannte Verfahren den Nachteil auf, daß die in die Spritzgießform eingeführte Materialmenge von Arbeitszyklus zu Arbeitszyklus schwanken kann, da auch die im zweiten Speicher nach jeder Nachdruckphase verbleibende Materialmenge von Arbeitszyklus zu Arbeitszyklus unterschiedlich sein kann. Dies läßt eine vom Hub der Schnecke abhängig gesteuerte Dosierung des in die Spritzgießform einzuführenden Materialvolumens nicht zu. Hinzu kommt, daß der dem zweiten Speicherraum zugeordnete Kolben einen zusätzlichen Antrieb und Steuereinrichtungen erfordert. Die Gesamtvorrichtung erfährt dadurch eine gewisse Komplizierung.

Aus der US-A-2 471 814 ist eine Vorrichtung zum Spritzgießen von Kunststoffteilen bekannt, deren Schnecke jedoch nicht axial verschiebbar ist. Die Förderung des Materials in die Spritzgießform hinein erfolgt überwiegend durch die Rotationsbewegung der Schnecke. Außerdem wird zu Beginn jedes Arbeitszyklus' ein gewisser Materialanteil, der auf den vorangegangenen Arbeitszyklus zurückgeht, durch eine Bewegung des mit der Spritzgießform zusammenwirkenden Düsenteils der Spritzgießeinrichtung in Richtung auf die Spritzgießform verdrängt. Ein auch nur halbwegs genaues Dosieren der Materialmenge, die in die Spritzgießform gebracht werden soll, ist bei dieser bekannten Vorrichtung nicht möglich.

Schließlich ist aus der US-A-3 395 424 eine Vorrichtung zum Herstellen von Kunststoffteilen durch Spritzgießen bekannt, bei welcher eine Schneckenpresse mit einer kontinuierlich laufenden Schnecke vorgesehen ist, ohne daß jedoch die Möglichkeit bestünde, die Schnecke gegenüber ihrem Gehäuse axial zu verschieben. Der erste Speicherraum dieser Vorrichtung kann somit nicht durch eine axiale Verschiebung der Schnecke entleert werden. Die kontinuierliche Betriebsweise der Schnecke macht es zudem unmöglich, die bei jedem Arbeitszyklus in die Spritzgießform einzubringende Materialmenge genau zu dosieren und wegabhängige Steuerungsmaßnahmen vorzusehen. Außerdem weist die bekannte Vorrichtung einen relativ komplizierten Aufbau auf, zumal sie zumindest drei unabhängig voneinander betätigbare Antriebsmittel erfordert.

Die Erfindung geht aus einem Verfahren der einleitend beschriebenen Art. Ihr liegt die Aufgabe zugrunde, dieses so zu verbessern, daß es mit einfachen Mitteln möglich ist, bei jedem Arbeitszyklus das gleiche Materialvolumen in die Spritzgießform einzubringen. Ferner wird angestrebt, den Aufwand für die zum Aufbringen des Nachdruckes unabhängig von der Schnecke des Extruders erforderlichen Mittel zu verringern. Das thermoplastische Material soll innerhalb des Düsenkopfes und des zweiten Speicherraumes möglichst wenig Umlenkungen erfahren, so daß zumindest im Grundsatz trotz des Vorhandenseins des zweiten Speicherraumes das Material bei möglichst kurzer Verweilzeit in der Vorrichtung einen im wesentlichen linearen Strömungsverlauf beibehält und auch die einzelnen Partikel des thermoplastischen Materials etwa in der zeitlichen Reihenfolge in die Spritzgießform eingeführt werden, in welcher sie den Extruder passieren.

Zur Lösung dieser Aufgabe schlägt die Erfindung vor, daß nach Beendigung des Füllvorganges der durch die Axialverschiebung der Schnecke aufgebrachte Druck auf niedrigerem Niveau aufrechterhalten und die durch das Antriebsmittel auf den Düsenkopf ausgeübte Kraft soweit abgesenkt wird, daß aufgrund des Druckes der Schnecke der im zweiten Speicherraum befindliche, mit dem Düsenteil verbundene Ringkolben gegenüber dem Düsenkopf unter gleichzeitiger Füllung des zweiten Speicherraumes parallel zur Längsachse der Schnecke verschoben wird, worauf die Verbindung zwischen Extruder und zweitem Speicherraum unterbrochen und die durch das Antriebsmittel auf dem Düsenkopf aufgebrachte Kraft so eingestellt wird, daß sie über den im Speicherraum verschiebbaren Ringkolben die für den weiteren Nachdruck erforderliche Kraft aufbringt, worauf nach Beendigung der Nachdruckphase die Verbindung zwischen Extruder und Speicherraum wiederhergestellt und durch entsprechende Veränderung der durch das Antriebsmittel auf den Düsenkopf aufgebrachten Kraft der Ringkolben wieder unter gleichzeitiger Verdrängung des im zweiten Speicherraum noch befindlichen thermoplastischen Materials in Richtung auf den Extruder in seine den entleerten Zustand des zweiten Speicherraums entsprechende Position zurückbewegt wird.

Diese Verfahrensweise hat den Vorteil, daß die üblichen, von der Schneckenposition abhängigen Steuerungsmaßnahmen weiterhin mit hoher Präzision benutzt werden können. Dies gilt gleichermaßen für den Plastifiziervorgang, innerhalb dessen das für den jeweils nachfolgenden Spritzvorgang erforderliche Materialvolumen genau über die Position der Schnecke während des Füllhubes dosiert wird, und für den Spritzvorgang, bei welchem das durch den Ausstoßhub der Schnecke verdrängte Materialvolumen in die Form gedrückt wird sowie Geschwindigkeit und Druckänderung von der Schneckenposition abgeleitet werden.

Eine Vorrichtung mit der das erfindungsgemäßen Verfahren durchgeführt werden kann ist vorteilhaft so ausgebildet, daß der zweite Speicherraum Teil des Verbindungskanals im Düsenkopf zwischen Extruder und Spritzgießform darstellt und der Kolben als parallel zur Längsachse der Schnecke verschiebbarer Ringkolben ausgebildet und mit dem mit der Spritzgießform zusammenwirkenden Düsenteil des Düsenkopfes verbunden ist und der aus Extruder und Düsenkopf bestehenden Einheit ein eine axiale Verschiebung dieser Einheit bewirkendes Antriebsmittel zugeordnet ist. Bei letzterem handelt es sich vorteilhaft um die an den meisten Spritzgießvorrichtungen ohnehin vorhandenen hydraulische Zylinder-Kolben-Anordnung, mittels welcher die aus Extruder und Düsenkopf bestehende Einheit parallel zur Längsache des Extruders auf die Spritzgießform zu und von dieser weg verschoben werden kann. D. h., daß der dem zweiten Speicherraum zugeordnete, das Düsenteil tragende Ringkolben ebenfalls parallel zur Längsachse des Extruders und damit im wesentlichen parallel zur Strömungsrichtung des thermoplastischen Materials im Düsenkopf hin- und herbewegbar ist, so daß das thermoplastische Material weder beim Füllen noch beim Entleeren des zweiten Speicherraumes eine scharfe Umlenkung erfährt.

Das Absperrelement kann als Kolben ausgebildet sein, der innerhalb einer im Düsenkopf befindlichen Bohrung axial verschiebbar und mit einem axialen Durchgang versehen ist, der den im Bereich des Kolbens befindlichen Durchgang im Düsenkopf angepaßt ist.

In der Zeichnung ist eine Vorrichtung zur Ausführung des Verfahrens dargestellt. Es zeigen:

Fig. 1 einen Längsschnitt durch einen Abschnitt einer Spritzgießvorrichtung mit gefülltem ersten Speicherraum und entleertem zweiten Speicherraum

Fig. 2 eine der Fig. 1 entsprechende Darstellung mit entleertem erstem Speicherraum und gefülltem zweiten Speicherraum,

Fig. 3 ein Diagramm, welches einen bevorzugten Zeitablauf der einzelnen Funktionen, während eines Arbeitszyklus darstellt.

Die in der Zeichnung dargestellte Spritzgießvorrichtung mit der das erfindungsgemäße Verfahren durchgeführt werden kann besteht im wesentlichen aus einem Extruder 10, innerhalb dessen Gehäuse 12 eine Schnecke 14 drehbar und axial verschiebbar angeordnet ist. Der Extruder kann in üblicher Weise ausgebildet sein. Das dem Extruder im allgemeinen in Form eines Granulats aufgegebene Kunststoffmaterial wird unter Einwirkung von Wärme und der Drehbewegung der Schnecke 14 plastifiziert und gleichzeitig in Richtung des Pfeiles 16 transportiert. Die Schnecke 14 ist axial verschiebbar im Gehäuse 12 gelagert derart, daß das durch die Schnecke transportierte thermoplastische Material die Schnecke 14 entgegen der Richtung des Pfeils 16 unter Bildung eines ersten Speicherraumes 17 zurückschiebt, in welchem das plastifizierte Material zunächst gesammelt wird. An den Extruder 10 schließt ein Düsenkopf 18 an, welcher mit einem, bezogen auf den Extruder 10, axialen Durchgang 20 versehen ist. In einem erweiterten Abschnitt 22 dieses Durchganges 20 ist ein Ringkolben 24 axial hin- und herverschiebbar geführt, der an seiner dem Extruder 10 abgekehrten Seite ein Düsenteil 26 trägt, das in der üblichen Weise derart zur Anlage an der Spritzgießform 30 gebracht werden kann, daß sein Durchgang 28 für das thermoplastische Material mit dem Eintrittskanal 32 der Spritzgießform 30 fluchtet. Der Innenquerschnitt des Ringkolbens 24 verringert sich gleichmäßig in Richtung auf den Durchgang 28 bis auf dessen Durchmesser. Dies bewirkt ein gleichmäßiges und von scharfen Umlenkungen freies Fließen des thermoplastischen Materials innerhalb des Ringkolbens 24.

Der erweiterte, zylindrische Abschnitt 22 bildet einen zweiten Speicherraum für das thermoplastische Material. Zwischen zweitem Speicherraum 22 und Extruder 10 ist innerhalb einer Bohrung 36 des Düsenkopfes 18 ein darin geführter Kolben 34 passend angeordnet, der im wesentlichen senkrecht zum Durchgang 20 verläuft und mit einem radialen Durchgang 38 versehen ist, dessen Querabmessungen etwa denen des Durchganges 20 entsprechen. Bei der in der Zeichnung dargestellten Lage des Kolbens 34 fluchtet der Durchgang 38 im Kolben 34 mit dem Durchgang 20 im Düsenkopf 18, so daß das thermoplastische Material unbehindert aus dem Extruder 10 durch den Düsenkopf 18 in die Spritzgießform 30 fliessen kann. Andererseits hat eine axiale Verschiebung des Kolbens 34 um einen Betrag, der mindestens dem Durchmesser des Durchganges 38 entspricht, ein Verschliessen des Durchganges 20 zur Folge, so daß das thermoplastische Material weder aus dem Extruder 10 in den zweiten Speicherraum 22 noch aus letzterem in den Extruder 10 gelangen kann.

Die aus Extruder 10 und Düsenkopf 18 einschließlich Ringkolben 24 und Düsenteil 26 bestehende Einheit ist gegenüber der Spritzgießform 30 axial bewegbar gelagert und über eine Traverse 39 mit der Kolbenstange 40 eines in einem Hydraulikzylinder 42 geführten Kolbens 44 verbunden. Selbstverständlich können insbesondere zur Erzielung symmetrischer Krafteinleitungen zwei oder mehrere Zylinder-Kolben-Anordnungen vorgesehen sein.

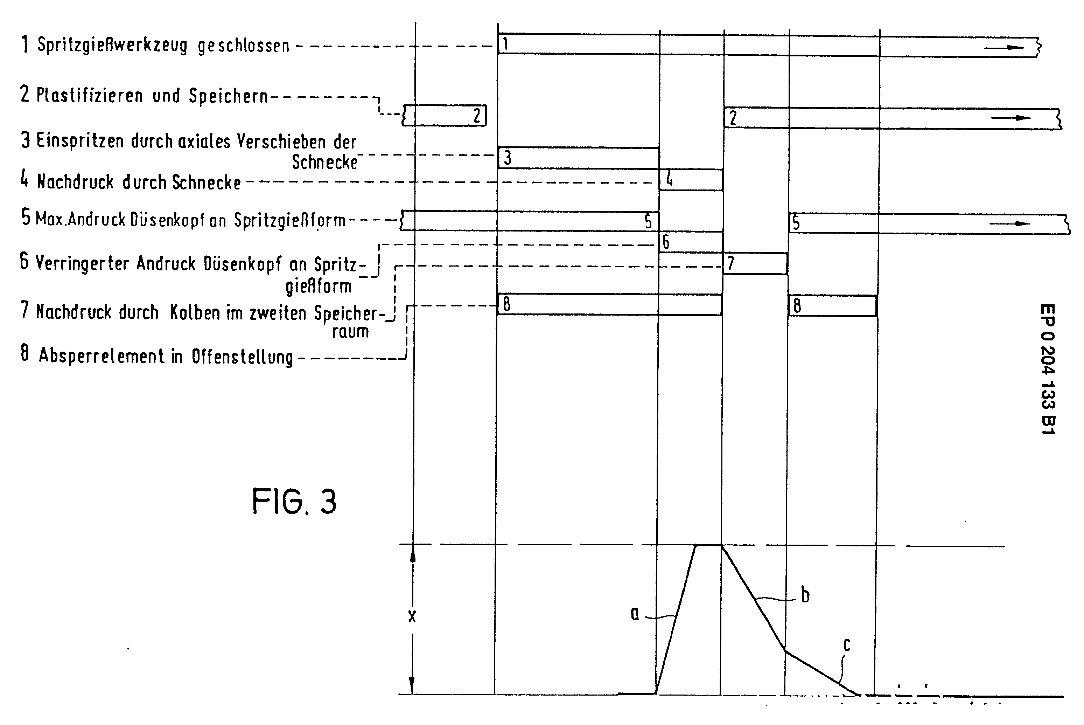

Die in der Zeichnung dargestellte Spritzgießvorrichtung arbeitet folgendermaßen, wobei der in Fig. 3 dargestellte Arbeitszyklus mit dem Schliessen der nicht im Detail dargestellten Spritzgießform nach Entnahme des im vorangegangenen Arbeitszyklus hergestellten Spritzgießteiles beginnen soll.

Es sei angenommen, daß mit dem Schließen der Spritzgießform (Funktion 1 in Fig. 3) oder kurz vorher die für einen Arbeitszyklus benötigte Menge an thermoplastischem Material bereitgestellt ist. Dies geschieht in der Weise, daß durch die rotierende Schnecke 14 und durch gleichzeitige Wärmeeinwirkung das im allgemeinen in Granulatform dem Extruder 10 aufgegebene Kunststoffmaterial plastifiziert und durch die Schnecke 14 in Richtung auf den Düsenkopf 18 transportiert wird. Dabei wird zunächst das thermoplastische Material in einem ersten Speicherraum 17, der sich an dem dem Düsenkopf 18 zugekehrten Ende des Extruders 10 befindet, gesammelt, wobei, wie bereits erwähnt, die innerhalb des Gehäuses 12 axial verschiebbar angeordnete Schnecke 14 während der Plastifizierung und Förderung des Materials in Richtung des Pfeiles 16 entgegen dieser Richtung durch das sich im ersten Speicherraum 17 sammelnde Material zurückgeschoben wird (Funktion 2). Dabei ist das Absperrelement 34 geschlossen. Nachdem sich eine ausreichende Menge an thermoplastischem Material im ersten Speicherraum 17 angesammelt hat, was durch die Verschiebung der Schnecke festgestellt wird, wird der Rotationsantrieb der Schnecke abgeschaltet. Nach Öffnen des Absperrelementes 34 (Funktion 8) wird durch Verschieben der Schnecke 14 aus ihrer bei für einen Spritzvorgang gefülltem Speicherraum 17 linken Endlage in Richtung des Pfeiles 16 nach rechts das angesammelte Material in Richtung auf die Spritzgießform 30 zum Füllen derselben verdrängt (Funktion 3). Bei diesem Vorgang wirkt die dabei nicht rotierende Schnecke 14 als Kolben.

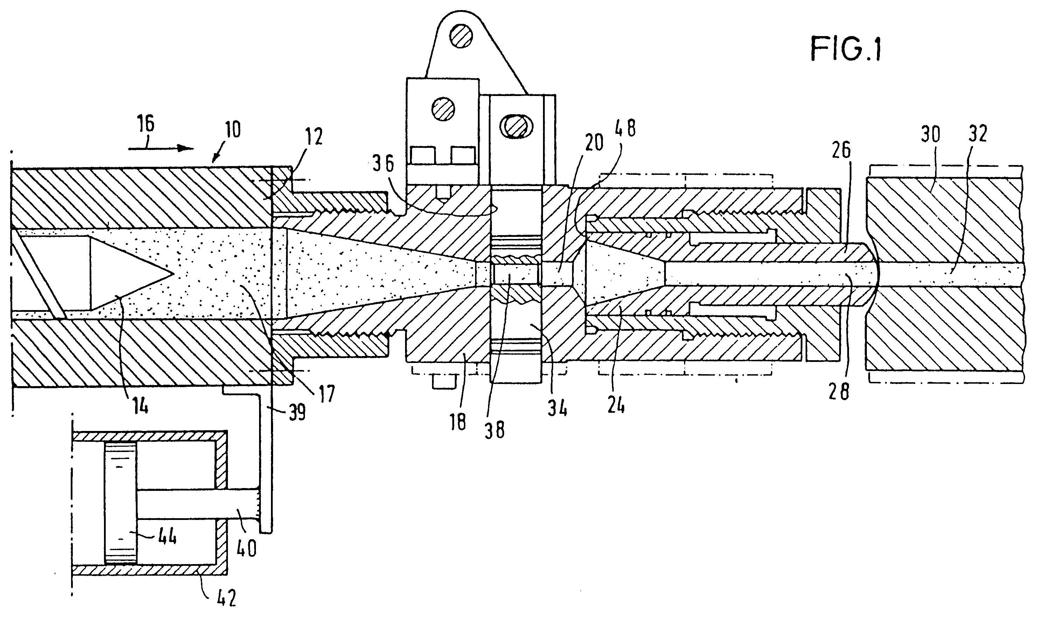

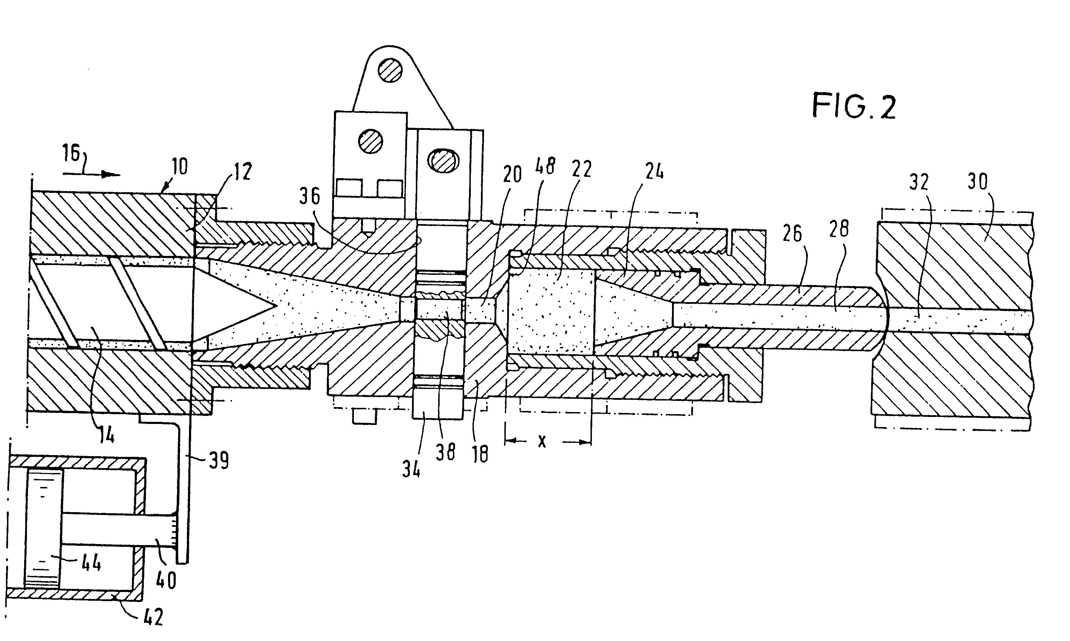

Spätestens unmittelbar vor Beginn des Spritzvorganges wird die Zylinder-Kolben-Anordnung 42, 44 mit einem ersten Druck beaufschlagt, der die aus Extruder 10 und Düsenkopf 18 mit Kolben 24 und Düsenteil 26 bestehende Einheit gegen die Spritzgießform 30 drückt (Funktion 5), wobei der dem zweiten Speicherraum 22 zugeordnete Kolben 24 gemäß der Darstellung in Fig. 1 seine linke Endposition inne hat, in welcher er an der stirnseitigen Begrenzung 48 des zweiten Speicherraumes 22 anliegt. Die Zylinder-Kolben-Anordnung 42, 44 bewirkt eine in Richtung des Pfeiles 16, also gegen die Spritzgießform 30 gerichtete, auf die als Extruder 10 und Düsenkopf 18 bestehende Einheit ausgeübte Kraft, die größer ist als die in Gegenrichtung wirkende Kraft, die aus der Verschiebung der Schnecke 14 nach rechts aus ihrer Position gemäß Fig. 1 in die Position gemäß Fig. 2 während der dadurch bewirkten Einspritzung des Materials in die Spritzgießform 30 resultiert. Auf diese Weise ist gewährleistet, daß das Düsenteil 26 in Anlage an der Spritzgießform bzw. an dem die Öffnung des Eintrittskanals 32 aufweisenden Bereich derselben bleibt. Dabei nimmt das Absperrelement 34 seine Offenstellung, also die in den Figuren 1 und 2 dargestellte Position, ein (Funktion 8).

Sobald im Verlauf der axialen Bewegung der Schnecke 14 in Richtung des Pfeiles 16 die Spritzgießform gefüllt ist, was durch den von der Schnecke im Verlauf des Füllvorgangs zurückgelegten Hub festgestellt wird, wird der durch die als Kolben wirkende Schnecke 14 ausgeübte Druck in der Regel verringert, da sich im anderen Fall ein zu hoher Druck in der Spritzgießform aufbauen könnte. Der so nach dem eigentlichen Füllvorgang aufrechterhaltene, verringerte Druck der Schnecke (Funktion 4) dient dazu, noch eine kleinere Menge an thermoplastischem Material in die Spritzgießform 30 zu drücken, um so durch Schwindung verursachte Volumenänderung des in der Spritzgießform bereits befindlichen und sich abkühlenden thermoplastischen Materials zu kompensieren. Etwa gleichzeitig mit dem Absenken des durch die Schnecke 14 ausgeübten Drucks auf das Nachdruckniveau (Funktion 4) wird auch der durch die Zylinder-Kolben-Einheit 42, 44 in Richtung des Pfeiles 16 ausgeübte Druck reduziert derart, daß er eine Kraft (Funktion 6) verursacht, die kleiner ist als die in Gegenrichtung wirkende Kraft, die durch den auf dem niedrigeren Nachdruckniveau gemäß Funktion 4 wirksamen Druck der Schnecke 14 verursacht wird. Dies hat zur Folge, daß der Extruder 10 mit dem Düsenkopf 18 entgegen der Pfeilrichtung 16, also, bezogen auf die Darstellungen in den Figuren 1 und 2, nach links verschoben wird, bis der Kolben 24 seine in Fig. 2 dargestellte rechte Endlage einnimmt, wobei das Düsenteil 26 seine Position in Kontakt mit der Spritzgießform 30 beibehält. Die dabei erfolgende Relativverschiebung zwischen Düsenkopf 18 einerseits und Kolben 24 andererseits wird dadurch verursacht, daß der als zweiter Speicherraum wirkende Abschnitt größeren Durchmessers 22 mit thermoplastischem Material gefüllt wird. Der maximale Weg, um den der Kolben 24 verschoben wird, ist in Fig. 2 und Fig. 3 der Zeichnung mit x bezeichnet. Demzufolge entspricht die Position des Kolbens 24 in Fig. 1 dem Niveau der Ordinate in Fig. 3, auf der die Zeit aufgetragen ist, wohingegen die andere Endlage des Kolbens 24 in Fig. 2 der parallel zur Ordinate in Fig. 3 eingezeichneten strichpunktierten Linie entspricht. Die während der Wirksamkeit der Funktion 6 erfolgende relative Bewegung des Kolbens 24 entspricht somit dem linken Kurvenabschnitt a zwischen Ordinate und dazu paralleler strichpunktierter Linie in Fig. 3.

Im allgemeinen wird dann, wenn der Kolben 24 seine rechte Endlage erreicht hat (Fig. 2), das Absperrelement durch axiales Verschieben des Kolbens 34 aus seiner Offenstellung (Funktion 8) in seine Schließlage gebracht, so daß die Verbindung zwischen Extruder 10 und zweitem Speicherraum 22 sowie Spritzgießform 30 unterbrochen ist, d.h., daß die Schnecke 14 nunmehr wieder in Rotation versetzt werden kann, um das thermoplastische Material für den nächsten Arbeitszyklus zu plastifizieren und im ersten Speicherraum 17 zu sammeln (Wiederaufnahme der Funktion 2). Der immer noch auf das in der Spritzgießform 30 befindliche thermoplastische Material auszuübende Nachdruck wird nunmehr durch die Zylinder-Kolben-Anordnung 42, 44 aufgebracht (Funktion 7), die die aus Extruder 10 und Düsenkopf 18, mit Kolben 24 und Düsenteil 26 bestehende Einheit in Richtung des Pfeiles 16 gegen die Spritzgießform 30 drückt. Dabei werden, soweit dies durch Schwinden des in der Spritzgießform 30 befindlichen thermoplastischen Materials erforderlich und möglich ist, Extruder 10 und Düsenkopf 18 gegenüber dem Kolben 24 mit Düsenteil 26 nach rechts, in Richtung des Pfeiles 16 verschoben, und zwar unter gleichzeitiger Verdrängung einer entsprechenden Menge an thermoplastischem Material aus dem zweiten Speicherraum 22 durch den Ringkolben 24 hindurch in Richtung auf das Formnest der Spritzgießform 30. Das Ausmaß der Relativverschiebung zwischen Extruder 10 mit Zwischenstück 18 einerseits und Kolben 24 mit Düsenteil 26 andererseits hängt dabei von den jeweiligen Gegebenheiten, insbesondere dem Ausmaß der in diesem Zeitraum noch stattfindenden Schwindung des in der Spritzgießform befindlichen Materials, ab. In Fig. 3 soll der Kurvenabschnitt b der während des Nachdrückens er folgenden Verschiebung des Kolbens 24 aus der Position gemäß Fig. 2 nach links in eine Zwischenposition zwischen den beiden Endlagen entsprechen.

Sobald das thermoplastische Material in der Spritzgießform soweit erstarrt ist, daß von außen kein weiteres Material mehr in die Spritzgießform 30 eingedrückt werden kann, wird das Absperrelement 34 wieder in seine Offenstellung, also in die in den Figuren 1 und 2 dargestellte Position gebracht (Funktion 8). Danach wird der durch die Zylinder-Kolben-Anordnung 42, 44 aufgebrachte Druck so eingestellt, daß die dadurch bewirkte Kraft ausreicht, die aus Extruder 10 und Düsenkopf 18 bestehende Einheit nach rechts gegenüber dem Kolben 24 und dem Düsenteil 26 zu verschieben (Funktion 7), bis der Kolben 24 die in Fig. 1 dargestellte linke Endlage erreicht hat, in welcher er an der Stirnseite 48 des zweiten Speicherraumes 22 anliegt. Die dabei vom Kolben 24 relativ gegenüber dem Düsenkopf 18 zurückgelegte Wegstrecke entspricht dem Kurvenabschnitt c in der Darstellung gemäß Fig. 3. Das noch im zweiten Speicherraum befindliche Material 22 wird dabei entgegen der Richtung des Pfeiles 16 in den ersten Speicherraum 17 zurück verdrängt. Dadurch ergibt sich die genaue Dosiermöglichkeit, da der Kolben 24 am Ende seiner Bewegung, also in der in Fig. 1 dargestellten linken Endlage, seine Nullposition einnimmt, die er während des Entleerungshubes der Schnecke 14 und damit während des Füllens der Spritzgießform beibehält. Das Absperrelement 34 kann nach Beendigung dieses Vorganges wieder geschlossen werden, wobei es dann gemäß Fig. 3 mit Beginn des Einspritzens (Funktion 3) wieder geöffnet wird. Die Vorrichtung ist nunmehr für den nächsten Arbeitszyklus bereit, der beginnen kann, sobald die Spritzgießform 30 entleert und wieder geschlossen worden ist und die Schnecke 14 ihre vom Zwischenstück 18 abgekehrte Endlage gemäß Fig. 1 erreicht hat, in welcher sich eine für den nächsten Arbeitszyklus ausreichende Menge an thermoplastischem Material im ersten Speicherraum 17 befindet. Das Absperrelement 34 kann nach Beendigung der Funktion 7 wieder geschlossen werden, wobei es dann gemäß Fig. 3 mit Beginn des Einspritzens (Funktion 3)) wieder geöffnet wird.


**Patentanspruch**

Verfahren zum Herstellen von Gegenständen aus thermoplastischem Kunststoff durch Spritzgießen unter Verwendung eines mit einer Schnecke versehenen Extruders mit Düsenkopf (18) und einer Spritzgießform (30), bei welchem zunächst durch axiales Verschieben der Schnecke (14) des Extruders (10) das in einem ersten Speicherraum (17) gespeicherte Material in Richtung auf die Spritzgießform (30) zum Füllen derselben bewegt wird und nach dem Füllen der Spritzgießform (30) auf das in letzterer befindliche thermoplastische Material ein Nachdruck zur Kompensation von bei der Abkühlung auftretenden Materialschwindungen aufrechterhalten bleibt unter Verwendung eines Kolbens (24), der aus einem mit dem Verbindungskanal zwischen Extruder (10) und Spritzgießform (30) verbundenen zweiten Speicherraum (22) das darin befindliche thermoplastische Material in Richtung auf die Spritzgießform (30) zu verdrängen sucht, während die Verbindung zwischen Extruder (10) und Spritzgießform (30) unterbrochen ist, und während des Füllens der Spritzgießform (30) der Düsenkopf (18) mit dem Düsenteil (26) durch ein Antriebsmittel (40, 42) mit einer Kraft gegen die Spritzgießform (30) gedrückt wird, die größer ist als die entgegengerichtete Kraft, die aus dem Einpressen des thermoplastischen Materials in die Spritzgießform (30) resultiert, dadurch gekennzeichnet, daß nach Beendigung des Füllvorganges der durch die Axialverschiebung der Schnecke (14) aufgebrachte Druck auf niedrigerem Niveau aufrechterhalten und die durch das Antriebsmittel (40, 42) auf den Düsenkopf (18) ausgeübte Kraft soweit abgesenkt wird, daß aufgrund des Druckes der Schnecke (14) der im zweiten Speicherraum (22) befindliche, mit dem Düsenteil (18) verbundene Ringkolben (24) gegenüber dem Düsenkopf (18) unter gleichzeitiger Füllung des zweiten Speicherraumes (22) parallel zur Längsache der Schnecke (14) verschoben wird, worauf die Verbindung zwischen Extruder (10) und zweitem Speicherraum (22) unterbrochen und die durch das Antriebsmittel (40, 42) auf den Düsenkopf (18) aufgebrachte Kraft so eingestellt wird, daß sie über den im Speicherraum (22) verschiebbaren Ringkolben (24) die für den weiteren Nachdruck erforderliche Kraft aufbringt, worauf nach Beendigung der Nachdruckphase die Verbindung zwischen Extruder (10) und zweitem Speicherraum (22) wieder geöffnet und durch entsprechende Veränderung der durch das Antriebsmittel (40, 42) auf den Düsenkopf (18) aufgebrachten Kraft der Ringkolben (24) wieder unter gleichzeitiger Verdrängung des im zweiten Speicherraum (22) noch befindlichen Materials in Richtung auf den Extruder (10) in seine dem entleerten Zustand des zweiten Speicherraumes (22) entsprechende Position zurückbewegt wird.


**Claim**

A process for the production of articles of thermoplastic material by injection moulding using an extruder provided with a screw, having a nozzle head (18) and an injection moulding mould (30), wherein firstly the material which is stored in a first storage chamber (17) is moved towards the injection moulding mould (30) to fill same by axial displacement of the screw (14) of the extruder (10) and after the injection moulding mould (30) is filled a post-pressure is maintained on the thermoplastic material in the injection moulding mould in order to compensate for contractions of material which occur in the cooling phase, using a piston (24) which seeks to displace the thermoplastic material disposed in a second storage chamber (22) connected to the connecting passage between the extruder (10) and the injection moulding mould (30) out of said storage chamber (22) towards the injection moulding mould (30) while the communication between the extruder (10) and the injection moulding mould (30) is interrupted and during the operation of filling of the injection moulding mould (30) the nozzle head (18) is urged with the nozzle portion (26) towards the injection moulding mould (30) by a drive means (40, 42) with a force which is greater than the oppositely directed force which results from the thermoplastic material being pressed into the injection moulding mould (30), characterised in that after termination of the filling operation the pressure applied by the axial displacement of the screw (14) is maintained at a lower level and the force applied by the drive means (40, 42) to the nozzle head (18) is reduced to such an extent that by virtue of the pressure of the screw (14) the annular piston (24) which is disposed in the second storage chamber (22) and which is connected to the nozzle portion (26) is displaced relative to the nozzle head (18) parallel to the longitudinal axis of the screw (14), with the second storage chamber (22) being simultaneously filled, whereupon the communication between the extruder (10) and the second storage chamber (22) is interrupted and the force applied to the nozzle head (18) by the drive means (40, 42) is so adjusted that it applies the force required for the further post-pressure by way of the annular piston (24) which is displaceable in the storage chamber (22), whereupon after termination of the post-pressure phase the communication between the extruder (10) and the second storage chamber (22) is reopened and by a suitable variation in the force applied to the nozzle head (18) by the drive means (40, 42) the annular piston (24) is again moved back towards the extruder (10) into its position corresponding to the emptied condition of the second storage chamber (22), with the material still disposed in the second storage chamber (22) being simultaneously displaced.

**Revendication**

Procédé pour fabriquer des objets en matière thermoplastique moulée par injection, en utilisant une extrudeuse à vis sans fin pourvue d'une tête de refoulement (18) et associée à un moule d'injection (30), ce procédé consistant d'abord à faire coulisser axialement la vis sans fin (14) de l'extrudeuse (10), pour évacuer la matière plastique en attente dans une première chambre d'accumulation (17), afin de refouler cette matière en direction du moule d'injection (30), pour remplir celui-ci, et ensuite, une fois rempli le moule d'injection (30), on exerce sur la matière thermoplastique contenue dans le moule une pression de maintien, pour compenser les effets de retrait dus au refroidissement, au moyen d'un piston (24) qui tend à refouler en direction du moule la matière thermoplastique en attente dans une deuxième chambre d'accumulation (22) qui communique avec le canal de liaison allant de l'extrudeuse (10) au moule d'injection (30), cependant que l'on a coupé la communication entre l'extrudeuse (10) et le moule d'injection (30), alors qu'en outre, pendant le remplissage du moule d'injection (30), on applique un effort de poussée à la tête de refoulement (18) à laquelle est associée la filière de refoulement (26), au moyen d'un organe de poussée (40, 42), cet effort de poussée, qui met en appui la tête de refoulement et la filière de refoulement contre le moule d'injection (30), étant supérieur à la réaction antagoniste due à l'introduction sous pression de la matière thermoplastique dans le moule d'injection, procédé caractérisé en ce que, après achèvement de l'opération de remplissage du moule, on réduit à un niveau plus faible la pression due au coulissement axial de la vis sans fin (14), pour maintenir cette pression à ce niveau plus faible, et en ce qu'on réduit également l'effort de poussée appliqué sur la tête de refoulement (18) par l'organe de poussée (40, 42), jusqu'à une valeur telle que le piston annulaire (24), monté dans la deuxième chambre d'accumulation (22) et solidaire de la filière de refoulement (26), soit obligé de coulisser parallèlement à l'axe longitudinal de la vis sans fin (14) sous l'effet de la pression fournie par la vis sans fin, permettant ainsi le remplissage simultané de la deuxième chambre d'accumulation (22), après quoi on coupe la communication entre l'extrudeuse (10) et la deuxième chambre d'accumulation (22), et on règle l'effort de poussée appliqué à la tête de refoulement (18) par l'organe de poussée (40, 42), de manière à fournir l'effort nécessaire pour maintenir la pression de compensation, par l'intermédiaire du piston annulaire (24) monté à coulisse dans la deuxième chambre d'accumulation (22), tandis qu'ensuite, après achèvement de la phase de pression de compensation, on ouvre a nouveau la communication entre l'extrudeuse (10) et la deuxième chambre d'accumulation (22), et on agit de manière appropriée sur l'organe de poussée (40, 42), pour modifier l'effort de poussée appliqué par cet organe sur la tête de refoulement (18), afin de provoquer le retour du piston annulaire (24) en direction de l'extrudeuse (10), jusqu'à sa position pour laquelle la deuxième chambre d'accumulation (22) est vide de matière, le mouvement de retour du piston annulaire (24) assurant ainsi dans le même sens le refoulement de la matière plastique encore présente dans la deuxième chambre d'accumulation (22).

FIG.1

EP 0 204 133 B1

FIG.2

EP 0 204 133 B1

3

EP 0 204 133 B1

1 Spritzgießwerkzeug geschlossen - - - - - - - - -

2 Plastifizieren und Speichern - - - - - - - - -

3 Einspritzen durch axiales Verschieben der Schnecke - - - - - - - -

4 Nachdruck durch Schnecke - - - - - - - - - - -

5 Max. Andruck Düsenkopf an Spritzgießform - - - -

6 Verringerter Andruck Düsenkopf an Spritz- gießform

7 Nachdruck durch Kolben im zweiten Speicher- raum

8 Absperrelement in Offenstellung - - - - - - -

FIG. 3